# EUROPEAN PATENT APPLICATION

(11) **EP 2 551 053 A1**
(43) Date of publication of application: **30.01.2013**
(21) Application number: 12170035.5
(22) Date of filing: 30.05.2012
(51) Int. Cl.: B23Q 39/02, B24B 27/00

(54) **Machine for fettling and/or grinding and/or glazing and/or cleaning and/or polishing of workpieces**

(30) Priority: 26.07.2011 IT MI20111392
(71) Applicant: Ghidini Felice Italo E C. S.R.L., 25065 Lumezzane (Brescia) (IT)
(72) Inventor: Ghidini, Ruggero Massimo, 25065 Lumezzane (Brescia) (IT)
(74) Representative: Tarabbia, Luigi

(57) **Abstract**

A machine for carrying out surface machining of workpieces comprises a picking-up station, a handling assembly adapted to pick up at least one piece from said picking-up station and to position it in a plurality of orientations in a single work region, and a plurality of surface-finish tools to be activated on the piece in the single work region; the machine further comprises actuation and selection means acting on the surface-finish tools to move at least one of them in a reversible manner between a storage position, in which the surface-finish tool is not operative in the single work region, and an operating position in which, on the contrary, the surface-finish tool is present in the single work region.

## Description

The present invention relates to a machine for carrying out surface machining/finishing of workpieces, wherein the general expression "machining/finishing of workpieces" is understood as indicating a series of operations that typically may comprise fettling and/or grinding and/or glazing and/or cleaning and/or polishing operations.

It is known that surface-finishing machining of workpieces (metal parts and not, for example, made of different possible materials such as aluminium, zamak, brass or plastic materials, wood, glass and still others) belonging to objects that remain "in sight" in the finished product) are made in an automatic or manual manner, depending on the complexity of the pieces to be finished off and/or on the overall number of pieces/lots under production.

In particular, industrial machines are known for carrying out different types of surface machining on pieces, in which a handler element (which is usually referred to as an "anthropomorphic robot") locates and orientates the different pieces in the vicinity of suitable belts, rotary brushes and/or flap wheels which on the other hand, carry out the required machining on the piece itself.

Particularly known from patent EP1905537 are multi-tool machines for machining metal pieces of aluminium substantially comprising a robot arm bringing/facing at least one piece being machined to the tool-holding column rotating about a vertical axis.

Mounted around the axis of the tool-holding column are four work instruments or tools, which are selectively rotated so as to face the piece being machined suitably positioned by the robot arm.

This reference to the state of the art is however fully lacking in the possibility of carrying out surface finishing works to a high degree of refinement and/or having low invasive character; in other words, these machines of known type are not provided with "belt" instruments for "fine" surface finishing (and in particular do not show surface finishing elements for grinding and/or polishing and/or cleaning operations and the like, having a "belt-like" extension).

The just mentioned machines of known type can comprise different work stations and/or positions, which have a fixed location, unchangeable in time, and can have diversified tools (abrasive belts with different particle sizes, for example); in these machines, the handler element must therefore bring the workpiece being processed to the different "fixed work stations" defined by the different tools that are each time operative.

It should be noted that in machines of known type, each finish instrument (belt or brush) takes a fixed position/station unchangeable in time, irrespective of the type of kinematic driving of the instrument itself (or, where provided by the known art, irrespective of the ability to re-adjust its position in order to compensate for wear of the finish instrument itself).

The known art mentioned above, while being widely used, has some non-negligible drawbacks.

In fact, the necessity to move the piece being machined in different "fixed" work stations in space involves great difficulty in programming the handler element that must be able not only to bring the piece to each work position, but must also be able to rotate it and adjust/direct it with the maximum freedom in each station; satisfying this requirement may become very complicated (or even impossible) at work stations placed in critical positions relative to the kinematic degrees of freedom of the handler element itself.

In addition, the necessity to provide for several work stations separated in space, together with the necessity to give different orientations to the pieces being machined in the different work stations involves greater difficulty in programming the handler element, which limits the operating flexibility of the whole machine and increases the management costs/times of the operation.

Furthermore, the presence of different fixed work stations (and therefore of as many work areas spaced apart from each other in space) makes the whole machine more complex and in addition makes it take up an important volume/space; due to the above, the machines of known type are disadvantageous from the logistic point of view, because of the inefficient exploitation of the working spaces.

It is also to be pointed out that the machines of known type have another limiting factor resulting from the necessity to pick up and remove the discarded material or scraps resulting from the surface machining/finishing operations; in fact, in machines of known type this operation is performed by suitable sucking means dedicated to each work station, and this makes the machine much more complicated (due to the great number of components to be installed and the great bulkiness of the individual sucking lines).

Accordingly, the present invention aims at conceiving a machine for surface machining/finishing of pieces that is capable of substantially obviating the above mentioned limits.

Mainly, the present invention aims at providing a machine for surface machining/finishing of pieces enabling optimal exploitation of the possibilities of movement of the handler element, for the purpose of reducing the overall bulkiness and complexity of the machine itself, from an operating point of view.

The present invention further aims at making available a machine for surface machining/finishing of pieces (intended as any combination of fettling and/or grinding and/or glazing and/or cleaning and/or polishing operations) requiring simpler and easier programming operations, to the benefit of an easier use and a more reduced impact on the machining costs and times.

The present invention therefore aims at providing machines that are more compact in size and also efficient in the auxiliary operations, such as in terms of ability to pick up the debris from the surface machining/finishing operations of the pieces being machined.

The technical task mentioned and the aims specified are substantially achieved by a machine for surface finishing/machining of pieces having the features set out in one or more of the appended claims.

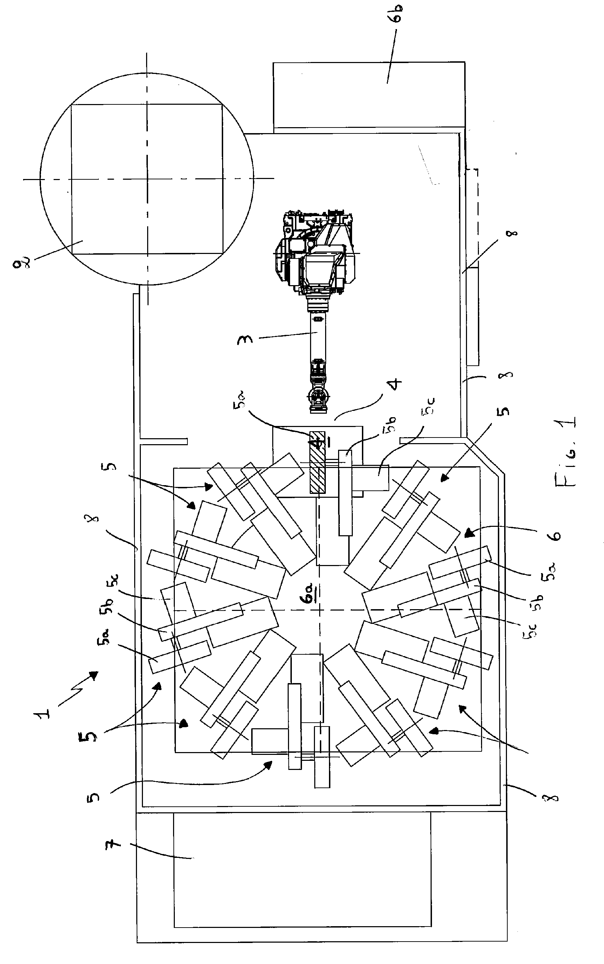

Reproduced hereinafter by way of non-limiting example is the description of a preferred but not exclusive embodiment of a machine according to the invention, depicted in the accompanying figure 1 and showing a diagrammatic plan view of a possible embodiment of the machine according to the invention.

With reference to the mentioned figure, the machine according to the present invention has been identified with reference numeral 1 and substantially comprises a picking-up station 2 adapted to house at least one piece to be submitted to working (this picking-up station 2 will be depicted in more detail in the following) and a handling assembly 3 adapted to pick up at least one piece from the picking-up station 2 and position it in a plurality of orientations in a single work region 4.

Conveniently, in order to carry out one or more of the fettling and/or grinding and/or glazing and/or cleaning and/or polishing operations, surface-finish tools 5 are present which can be operatively activated on a piece placed in the mentioned single work region 4.

Advantageously, the present machine 1 further comprises actuation and selection means 6 operatively acting on the surface-finish tools 5 so as to reversibly move at least one of them (and preferable move all of them, according to a predetermined sequential succession and operating logic) between a storage position in which one surface-finish tool 5 is not operating in the single work region 4, and an operating position in which, on the contrary, the same surface-finish tool 5 is present in the single work region 4.

At this point, it should be recognised the difference existing between this machine and the machines of known type: in fact, while the last-mentioned machines have a plurality of work instruments or tools diversified from each other in terms of functional features but fixed/irremovable in space, the present invention offers a new and original "dynamic" functionality involving variation of the position in space of the individual work tools; in this manner, it is possible to dynamically (and therefore with great flexibility of choice) shift/bring each possible work tool of the machine 1 always to the same single work region.

In other words, the present invention is based on a relative and simultaneous positioning concept of both the workpiece and the work tool in a single common area/space, while the work tools that are not at the present moment necessary remain stowed in their storage conditions; this enables the shifting and programming work of the handler element to be simplified and in addition makes the machine much more compact.

Coming back to the structural details of the present invention, it is possible to note that the actuation and selection means 6 comprises a movable base 6a adapted to support the surface-finish tools 5; this movable base 6a is conveniently suitable to move along and/or around at least one operating axis, following shifting modes that can be selected depending on the current requirements.

Also present is a propelling element (not shown in the accompanying figure) which is operatively connected to said movable base 6a to enable translational and/or rotary motions of same, and conveniently also detecting means (not shown as well) may be present for detecting the position of the surface-finish tools 5, which means can be activated at least as a function of movements of the movable base 6a.

In order to appropriately position the workpieces and the different surface-finish tools 5 in the work region 4, also present is control means 6b embodied by suitable software and interlocked with the above mentioned detecting means; this control means is adapted to receive commands from an operator and/or signals from at least the detecting means so as to select, activate, deactivate and move the movable base 6a and/or the propelling element and/or the surface-finish tools 5.

In the embodiment shown, the movable base 6a is engaged in a rotational manner around an operating axis substantially (but not compulsorily) vertical relative to the ground; in this way the surface-finish tools 5 are disposed radially on the movable base 6a and are therefore moved from/towards the single work region 4 by rotations around the mentioned operating axis vertical to the ground.

In turn, the surface-finish tools 5 substantially comprise a preferably belt-like abrasive portion 5a (or, depending on requirements, they may comprise a wheel-shaped structure, as it happens with glazing brushes or discs) adapted to carry out surface-finish of the workpiece, a support 5b acting on the abrasive portion to set it in relative motion with respect to the workpiece and suitable powering means 5c connected to the support 5b and/or the abrasive portion 5a (obviously, the two above mentioned alternative solutions for connection can be selected depending on the type of the abrasive portion and/or the support).

Setting tools 5 in operation can contemplate different actuating forms, depending on the current requirements; for example, for the machine 1 in the accompanying figure the powering means 5c is individually connected to each surface-finish tool 5; in this way, the individual abrasive portions 5a and/or the individual supports 5b are powered independently of the movable base 6a.

Alternatively, the powering means 5c of the surface-finish tools 5 can be "centralised" or, in other words, they may comprise a kinematic driving mechanism connected to the propelling element of the movable base 6a; in this manner, the individual abrasive portions 5a and/or the individual supports 5b are selectively moved (preferably when they are positioned at the work region 4 or, in other words, when they are put in their operating position) through this kinematic driving mechanism.

As to further components of the machine 1 according to the present invention, the latter may be provided with a handler 3 consisting of at least one anthropomorphic robot arm; depending on the type of machining operations to be carried out on the pieces and/or the possible work angles that the workpiece must be able to take relative to the tools 5, this anthropomorphic robot arm can have a predetermined variable number of degrees of freedom, depending on the current requirements.

Still for the purpose of maximising the operating flexibility, it is conveniently possible that also the picking-up station 2 be dynamically movable; for example the picking-up station 2 may comprise a movable drum having a plurality of housing spaces for workpieces.

To the aims of the present invention, it is important to note that the mode of loading the workpieces into the picking-up station 2 can by anyone, without this fact affecting the inventive concept of the present machine (as described above and hereinafter claimed).

In greater detail, this movable drum can rotate around a rotation axis substantially vertical to the ground; in this way the handler device 3 is adapted to selectively pick up at least one workpiece from a housing space of said movable drum (this housing space is therefore movable depending on the rotations of the drum around its own axis).

Obviously, depending on the current requirements, the movable drum can be replaced or combined with other types of storage and picking-up stations that will be able to have differentiated loading, unloading and shifting modes (rotational/translational shifting in space, for example) and suitable to be selected at will.

In order to confine the work space of the machine 1, the presence of a volumetric cover 8 may be possible, which cover defines the single work region 4 at least partly; in other words, the volumetric cover 8 defines a holding volume in which at least the surface-finish tools 5 and/or the movable base 6a are stowed.

Advantageously, due to the presence of the volumetric cover 8, in the present invention it is possible to implement suitable suction means 7; said suction means is active on the debris generated by the surface-finishing operations and is above all operative in said holding volume, so that said means can pick-up debris from anyone of the surface-finish tools (5) in the single work region (4).

In other words, the structural combination between the volumetric cover 8 and suction means 7 allows a single suction sub-system to be employed, which is able to work on all tools 5 without having suction lines dedicated to each individual tool 5; in addition, for maximising the efficiency of the sucking system the suction means 7 can be such disposed as to directly appear in the work region 4, so that they are always active in said region, irrespective of the tool 5 that is working at a given moment.

The invention achieves many advantages.

In fact, due to the particular construction architecture of the present machine it is possible to carry out different surface machining/finishing sequences, always keeping the workpiece in the same region in space and on each occasion changing the tools 5 operating on the piece; this involves better exploitation of the system resources and makes the work of the holder element less difficult in terms of both the positions/orientations that can be reached and the programming in advance of said movements.

In addition, the possibility of arranging different tools 5 on a movable base 6a enables the overall bulkiness of the machine to be reduced and also allows interventions for maintenance on tools 5 that are not in their work position without stopping operation of the machine itself.

In addition, a further advantage (both from a technical and economic point of view) results from the "centralised" mode of sucking the materials that is achieved by a much simpler and more efficient sub-system than those operating in the machines of known type, thus greatly reducing the overall power of the sucking plant as compared with the traditional one.

It should be finally recognised that the present invention enables the manufacturing costs of the whole machine to be maintained low and, if wished, does not involve particular complications for retro-fitting modifications even on machines of known type, which is advantageous for the general production economy and the final price of both the machine and the products obtained with the machine itself.

## Claims

1. A machine for carrying out surface machining of workpieces, said surface machining being preferably a fettling and/or grinding and/or glazing and/or cleaning and/or polishing operation and comprising:
- a picking-up station (2) adapted to house at least one piece to be submitted to working;
- a handling assembly (3) adapted to pick up at least one piece from said picking-up station (2) and position it in a plurality of orientations in a single work region (4); and
- a plurality of surface-finish tools (5) that can be operatively activated on said piece in said single work region (4),
- actuation and selection means (6) operatively acting on said surface-finish tools (5) so as to reversibly move at least one of them between a storage position in which said surface-finish tool (5) is not operative in said single work region (4), and an operating position in which, on the contrary, said surface-finish tool (5) is present in the single work region (4), **characterised in that** the surface-finish tools (5), in turn, comprise:
- a belt-like abrasive portion (5a) adapted to carry out said surface finish of a workpiece;
- a support (5b) acting on said abrasive portion (5a) to set it in motion relative to said workpiece; and
- powering means (5c) connected to the support (5b) and/or the abrasive portion (5a).

2. A machine as claimed in claim 1, wherein said actuation and selection means (6) comprises:
- a movable base (6a) adapted to support the surface-finish tools (5) and preferably suitable to move along and/or around at least one operating axis;
- a propelling element operatively connected to said movable base (6a) to enable translational and/or rotary motions of same;
- means for detecting the position of the surface-finish tools (5), which means can be activated at least as a function of movements of the movable base (6a); and
- control means (6b) adapted to receive commands from an operator and/or signals from at least the detecting means and also adapted to select, activate, deactivate and move the movable base (6a) and/or the propelling element and/or the surface-finish tools (5).

3. A machine as claimed in claim 2, wherein the movable base (6a) is rotatively engaged around an operating axis that is preferably vertical relative to the ground, the surface-finish tools (5) being radially disposed on the movable base (6a) and being moved in the single work region (4) through rotations around said operating axis relative to the ground.

4. A machine as claimed in claim 1, wherein said powering means (5c) is individually connected to each surface-finish tool (5), the individual abrasive portions (5a) and/or the individual supports (5b) being powered independently of the movable base (6a).

5. A machine as claimed in claim 1, wherein the powering means (5c) of the surface-finish tools (5) comprises a kinematic driving mechanism connected to the propelling element of the movable base (6a), the individual abrasive portions (5a) and/or individual supports (5b) being selectively moved through said kinematic driving mechanism and being preferably set in motion at the single work region (4) and/or on occurrence of the operating condition.

6. A machine as claimed in anyone of the preceding claims, wherein the handling assembly or handler (3) comprises at least an anthropomorphic robot arm or preferably any type of Cartesian handler, said anthropomorphic robot arm having a predetermined number of degrees of freedom.

7. A machine as claimed in anyone of the preceding claims, wherein said picking-up station (2) comprises a movable drum having a plurality of housing spaces for workpieces, said movable drum being preferably rotatable around a rotation axis substantially vertical to the ground, said handler being adapted to selectively pick-up at least one workpiece from a housing space of said movable drum.

8. A machine as claimed in anyone of the preceding claims, wherein also present is a volumetric cover (8) defining the single work region (4) at least partly, and also defining a holding volume in which at least the surface-finish tools (5) and/or the movable base (6a) are stowed.

9. A machine as claimed in claim 8, wherein also present is suction means (7) for debris from the surface-finish operations, said suction means (7) being operative in said holding volume and being adapted to pick-up debris from anyone of the surface-finish tools (5) in the single work region (4).
